# EUROPEAN PATENT APPLICATION

(11) **EP 4 700 600 A1**
(43) Date of publication of application: **25.02.2026**
(21) Application number: 23934348.6
(22) Date of filing: 23.04.2023
(51) Int. Cl.: G06F 16/25

(54) **SERVING END, DATA PROCESSING METHOD, DATA PROCESSING SYSTEM, AND ELECTRONIC DEVICE**

(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: QIAN, Mu, Shanghai 200241 (CN)
(74) Representative: Gong, Jinping
(86) International application number: PCT/CN2023/090145
(87) International publication number: WO 2024/221142

(57) **Abstract**

Embodiments of this application provide a server system, a data processing method, a data processing system, and an electronic device. The server system includes: a data domain configured to standardize processing of input data; a model domain configured to standardize definition of a data processing model; and a rule domain configured to define data processing rules. With the server system provided in the embodiments of this application, data barriers between different enterprises within an industry are effectively broken, and data processing standards of different enterprises within the industry are unified, thereby overcoming the problem of difficulty in data interoperability between enterprises and providing a reliable data foundation for industry co-construction.

## Description

### TECHNICAL FIELD

This application relates to the field of data processing, particularly to a server system, a data processing method, a data processing system, and an electronic device.

### BACKGROUND

With rapid development of the new energy industry, industry data exhibit diversity and dispersion, and data processing standards differ among enterprises. In addition, data processing fields involved by enterprises within the industry vary. For example, some enterprises possess data access capabilities, some enterprises possess data algorithm service capabilities, while others possess fault resolution capabilities. Data barriers exist between enterprises, and enterprises rigorously restrict external data exposure.

Evidently, due to divergent data processing standards and existing data barriers between enterprises, it is difficult for enterprises to achieve data interoperability, preventing effective participation of enterprises within the industry in industry co-construction and affecting industry development.

### SUMMARY

This application provides a server system, a data processing method, a data processing system, and an electronic device, addressing the problem of difficulty in data interoperability among enterprises within an industry in the prior art.

To achieve the above objective, this application adopts the following technical solution.

In a first aspect, a server system is provided, including:
a data domain configured to standardize processing of input data;
a model domain configured to standardize definition of a data processing model; and
a rule domain configured to define data processing rules.

In an embodiment of this application, the system architecture of the server system is divided into three domains, with each domain corresponding to a data processing field, providing data standardization services for different fields of data processing. With the server system provided in this embodiment of this application, data barriers between different enterprises within an industry are effectively broken, data processing standards of different enterprises within the industry are unified, thereby overcoming the problem of difficulty in data interoperability between enterprises and providing a reliable data foundation for industry co-construction.

In an implementation of the first aspect, the server system includes a first interface;
the first interface being configured to input data to be processed into the data domain.

In this embodiment of this application, the data domain interacts data with external systems located outside the server system through the first interface, equivalent to establishing a dedicated data input channel for the data domain. This approach effectively prevents confusion between data of the data domain and data of other domains, enhancing reliability and efficiency of data interaction between the data domain and the external systems.

In an implementation of the first aspect, the server system includes a second interface;
the second interface being configured to output data standardized by the data domain from the data to be processed.

In this embodiment of this application, the data domain interacts data with external systems located outside the server system through the second interface, equivalent to establishing a dedicated data output channel for the data domain. This approach effectively prevents confusion between data of the data domain and data of other domains, enhancing reliability and efficiency of data interaction between the data domain and the external systems.

In an implementation of the first aspect, the server system includes a third interface;
the third interface being configured to output model definition information of the data processing model.

In this embodiment of this application, the model domain interacts data with external systems located outside the server system through the third interface, equivalent to establishing a dedicated interaction channel between the model domain and the external systems located outside the server system. This approach effectively prevents confusion between model definition information of the model domain and data of other domains, enhancing reliability and efficiency of data interaction between the data domain and the external systems.

In an implementation of the first aspect, the server system includes a fourth interface;
the fourth interface being configured to provide an execution engine of the data processing rules.

In this embodiment of this application, the rule domain standardizes processing of external rule data through the fourth interface, effectively preventing confusion between data of the rule domain and data of other domains, enhancing reliability and efficiency of data interaction between the rule domain and the external systems, while unifying rule data flowing into the server system, facilitating subsequent data processing.

In an implementation of the first aspect, the server system includes a fifth interface, the fifth interface being configured to output data processed by the rule domain.

The fifth interface serves as a query interface for data processing results. In this embodiment of this application, the rule domain provides data processing results to external systems through the fifth interface, effectively preventing confusion between data of the rule domain and data of other domains, enhancing reliability and efficiency of data interaction between the rule domain and the external systems.

In an implementation of the first aspect, the data domain includes at least two data layers, different data layers being configured to store data at different processing stages during standardized processing.

In this embodiment of this application, the standardized processing of the data domain may include multiple processing stages, such as normalization processing, data cleaning, and data aggregation. Storing data at different processing stages in different data layers is equivalent to categorizing and storing data at different processing stages, organizing data during standardization. This approach facilitates data traceability and subsequent fault diagnosis.

In an implementation of the first aspect, the data layers include at least two storage media, different storage media being configured to store data of different categories.

In this embodiment of this application, categorizing and storing data in each data layer is equivalent to organizing data during standardization. This approach facilitates data traceability and subsequent fault diagnosis. In addition, as different enterprises possess different types of industry data, this approach allows enterprises to selectively connect to the server system based on their data types, enabling the server system to possess flexible access capabilities, capable of accommodating and standardizing relevant data of various enterprises.

In a second aspect, a data processing method applied to the server system according to any implementation of the first aspect is provided, the data processing method including:
standardizing processing of input data to be processed;
processing data standardized according to the data processing model; and
processing data processed by the data processing model according to the data processing rules.

In an embodiment of this application, the server system standardizes processing of data from different data sources, and processes standardized data based on standardized data processing models and data processing rules. This achieves standardization in three dimensions of data, models (algorithms), and rules, effectively breaks data barriers between different enterprises within an industry, and unifies data processing standards of different enterprises within the industry, thereby overcoming the problem of difficulty in data interoperability between enterprises and providing a reliable data foundation for industry co-construction.

In an implementation of the second aspect, prior to the standardizing processing of input data to be processed, the data processing method further includes:
sending a data definition to a client to enable the client to convert a data format according to the data definition and obtain the data to be processed.

Through the preprocessing process described above, the data definition is sent to the client for the client to perform data format conversion, allowing the data domain of the server system to interact with various types of clients, facilitating subsequent standardized data processing. In addition, this preprocessing process is equivalent to pre-standardize client data, effectively reducing the data processing load of the data domain in the server system.

In an implementation of the second aspect, the data domain standardizing processing of input data to be processed includes:
performing data cleaning on the data to be processed to obtain cleaned data; and
performing data aggregation on the cleaned data to obtain standardized data.

Through the data processing process described above, data from different data sources are integrated, achieving standardized processing of data from various enterprises.

In an implementation of the second aspect, the data processing method further includes:
storing the data to be processed, the cleaned data, and the standardized data in different data layers, respectively.

In this embodiment of this application, the standardized processing of the data domain may include multiple processing stages, such as normalization processing, data cleaning, and data aggregation. Storing data at different processing stages in different data layers is equivalent to categorizing and storing data at different processing stages, organizing data during standardization. This approach facilitates data traceability and subsequent fault diagnosis.

In an implementation of the second aspect, the data processing method further includes:
dividing data stored in each data layer into at least two categories for each data layer; and
storing data of different categories in different storage media within the data layer.

In this embodiment of this application, categorizing and storing data in each data layer is equivalent to organizing data during standardization. This approach facilitates data traceability and subsequent fault diagnosis. In addition, as different enterprises possess different types of industry data, this approach allows enterprises to selectively connect to the server system based on their data types, enabling the server system to possess flexible access capabilities, capable of accommodating and standardizing relevant data of various enterprises.

In an implementation of the second aspect, the data processing model includes a plurality of operators; and
the data processing method further including:
defining operators in the data processing model according to an operator specification language.

In this embodiment of this application, operator definitions may be provided by the model domain, callable by upper-layer application without requiring for adaptation to various algorithm sources. This operator definition enables standardization of the data processing model.

In an implementation of the second aspect, the processing data standardized according to the data processing rules includes:
combining and sorting a plurality of the data processing models according to the data processing rules to obtain a model sequence; and
performing data processing on the standardized data according to the model sequence.

In an implementation of the second aspect, the data processing method further includes:
standardizing processing of input sample data;
setting labels on standardized sample data to obtain training data; and
training the data processing model according to the training data.

In an implementation of the second aspect, the data processing method further includes:
acquiring encrypted data from a blockchain;
decrypting the encrypted data to obtain a data catalog, where the data catalog includes a data digest of sample data in a client;
standardizing processing of the data catalog; and
training the data processing model according to the standardized data catalog.

In this embodiment of this application, because the data catalog only includes a data digest of sample data in the client and does not include specific information of the sample data, the client does not provide detailed data to the server system, enhancing privacy and security of data in the client.

In an implementation of the second aspect, the training the data processing model according to the standardized data catalog includes:
establishing a general processing model according to the standardized data catalog;
sending the general processing model to a client to enable the client to train the general processing model according to sample data corresponding to the standardized data catalog and obtain intermediate data;
acquiring the intermediate data; and
updating the general processing model according to the intermediate data to obtain the data processing model.

In this embodiment of this application, each enterprise trains the general processing model based on its own data without exposing the data to the server system, ensuring privacy and security of enterprise data. In addition, intermediate data reported by each enterprise to the server system represents processing results of the general processing model by each enterprise, preventing the server system and other enterprises from accessing sample data of the enterprise through the intermediate data. This method further ensures privacy and security of enterprise data while ensuring the data processing model.

In a third aspect, a data processing system is provided, including a server system and a client; the server system implementing the data processing method according to any implementation of the second aspect.

In an embodiment of this application, the data processing system composed of the server system and the client effectively breaks data barriers between different enterprises within an industry, and unifies data processing standards of different enterprises within the industry, thereby overcoming the problem of difficulty in data interoperability between enterprises and providing a reliable data foundation for industry co-construction.

In a fourth aspect, an electronic device is provided, including a memory, a processor, and a computer program stored in the memory and capable of running on the processor, where the processor, when executing the computer program, implements the data processing method according to any implementation of the second aspect.

In a fifth aspect, a computer-readable storage medium is provided, on which a computer program is stored, where the computer program, when executed by a processor, implements the data processing method according to any implementation of the second aspect.

The above description is only an overview of the technical solution of this application. To enable a clearer understanding of the technical means of this application and implementation according to the content of the specification, and to make the above and other objectives, features, and advantages of this application more apparent and understandable, specific implementations of this application are exemplified below.

### BRIEF DESCRIPTION OF DRAWINGS

FIG. 1 is a schematic diagram of a system architecture of a server system according to an embodiment of this application;
FIG. 2 is a structural schematic diagram of server system interfaces according to an embodiment of this application;
FIG. 3 is a schematic diagram of layered storage according to an embodiment of this application;
FIG. 4 is a schematic flowchart of a data processing method according to an embodiment of this application;
FIG. 5 is a schematic diagram of interaction between a server system and a client according to an embodiment of this application; and
FIG. 6 is a schematic structural diagram of a data processing system according to an embodiment of this application.

### DESCRIPTION OF EMBODIMENTS

The description below is merely intended to more clearly illustrate the technical solution of this application and serves only as an example, not limiting the protection scope of this application.

Unless otherwise defined, all technical and scientific terms used herein have the same meaning as commonly understood by those skilled in the technical field of this application; terms used herein are solely for describing specific embodiments and are not intended to limit this application; terms "including" and "having" and any variations thereof in the specification, claims, and the above description of drawings of this application are intended to cover non-exclusive inclusion.

In the description of embodiments of this application, technical terms "first," "second," and similar terms are used only to distinguish different objects and should not be understood as indicating or implying relative importance or implicitly indicating the number, specific order, or hierarchical relationship of the technical features indicated. In the description of embodiments of this application, "plurality" means two or more unless explicitly and specifically defined otherwise.

Reference herein to "embodiment" means that a particular feature, structure, or characteristic described in connection with the embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates an "or" relationship between contextually associated objects.

With rapid development of the new energy industry, industry data exhibit diversity and dispersion. For example, battery manufacturers possess various initialization data before battery delivery, raw material data, and other basic static data. Vehicle manufacturers possess complete dynamic data of battery charge and discharge, such as battery voltage, current, temperature, usage duration, voltage-temperature differences, and fast charging, but lack initialization data before battery delivery, raw material data, and other basic static data. Some charging pile manufacturers possess operational data of charging piles but lack dynamic data from vehicle manufacturers and static data from battery manufacturers. For the entire industry, building a complete battery application system requires basic static battery data, dynamic battery charge and discharge data, and operational data of charging piles. Currently, data processing standards differ among different enterprises within the industry, making data interoperability between enterprises difficult, preventing effective participation of enterprises within the industry in industry co-construction and affecting industry development.

In addition, data processing fields involved by different enterprises within the industry vary. For example, some enterprises possess basic battery data and data access capabilities; some enterprises possess data processing algorithm service capabilities but lack basic battery data; others can provide fault scenario solutions and possess fault resolution capabilities but lack basic battery data and data processing algorithm service capabilities. Establishing a complete battery application system necessitates contributions from every data processing field. Currently, data barriers exist between enterprises, and enterprises rigorously restrict external data exposure, and it is difficult for enterprises to achieve data interoperability, preventing effective participation of enterprises within the industry in industry co-construction and affecting industry development.

Based on the above considerations, to address the problem of difficulty in data interoperability between enterprises within an industry, an embodiment of this application provides a server system. The server system performs reasonable functional division of the system for different fields of data processing and provides data standardization services for each functional domain of the system. With the server system provided in this embodiment of this application, data barriers between different enterprises within an industry are effectively broken, data processing standards of different enterprises within the industry are unified, thereby overcoming the problem of difficulty in data interoperability between enterprises and providing a reliable data foundation for industry co-construction.

The server system in this embodiment of this application may be a single server or a server cluster composed of multiple servers. Specifically, the server system may be a single server containing several storage upgrade packages or a distributed server cluster containing distributed storage upgrade packages, group configuration information, or upgrade policy information. For example, a distributed server may be a server cluster composed of multiple servers, including cloud computing servers, content delivery network (Content Delivery Network, CDN) servers, network time protocol (Network Time Protocol, NTP) servers, domain name system (Domain Name System, DNS) servers, and the like. Servers within the server cluster coordinate with each other to collectively perform computation, data storage, communication, and other functions. For ease of description, in embodiments of this application, a single server, distributed server, and server cluster is collectively referred to as a server system.

The server system is introduced below with specific embodiments.

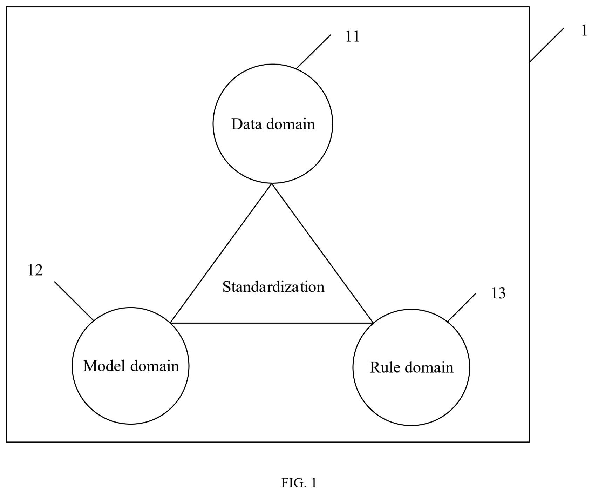

Referring to FIG. 1, a schematic diagram of a system architecture of a server system according to an embodiment of this application is shown. As shown in FIG. 1, server system 1 includes a data domain 11, a model domain 12, and a rule domain 13. The data domain 11 is configured to standardize processing of input data, the model domain 12 is configured to standardize definition of a data processing model, and the rule domain 13 is configured to define data processing rules.

It can be understood that, in embodiments of this application, "domain" in "data domain," "model domain," and "rule domain" may refer to a field. Specifically, the three domains correspond to different data processing fields, and accordingly, the three domains connect to enterprises belonging to different data processing fields. For example: the data domain 11 corresponds to the data access field, connecting to enterprises possessing basic battery data and data access capabilities; the model domain 12 corresponds to the algorithm processing field, connecting to enterprises possessing data processing algorithm service capabilities; and the rule domain 13 corresponds to the fault resolution field, connecting to enterprises possessing fault resolution capabilities.

In some implementations, the data domain 11, the model domain 12, and the rule domain 13 may be implemented by different modules or units within the server system, respectively. For example, when the server system is a single server, the three domains may be implemented by three different computing modules within the server. When the server system is a server cluster, the three domains may be implemented by different servers within the server cluster. The three domains may process data serially or in parallel.

In an embodiment of this application, the data domain 11 may acquire data to be processed from external systems through an interface of the server system and performs standardized processing on the data to be processed.

In this embodiment of this application, the model domain 12 may provide standardized operator definitions and transmits the operator definitions to external systems through an interface of the server system, enabling enterprises to standardize their data processing models based on the operator definitions. Of course, the model domain 12 may alternatively acquire non-standardized data processing models from the external systems through an interface of the server, perform standardized processing on the non-standardized data processing models based on standardized operator definitions, and obtain standardized data processing models. An operator is the smallest unit of a data processing model.

In this embodiment of this application, the rule domain 13 acquires fault models from external systems through an interface of the server system (fault models being configured to detect and/or resolve faults) and defines relationships between fault models and data processing models, namely data processing rules. It can be understood that, data processing rules are an orchestration of algorithms (data processing models) based on fault models, serving as rules for fault determination.

In this embodiment of this application, the system architecture of the server system is divided into three domains, with each domain corresponding to a data processing field, providing data standardization services for different fields of data processing. With the server system provided in this embodiment of this application, data barriers between different enterprises within an industry are effectively broken, data processing standards of different enterprises within the industry are unified, thereby overcoming the problem of difficulty in data interoperability between enterprises and providing a reliable data foundation for industry co-construction.

As described in the above embodiment, the server system interacts data with external systems through interfaces. In some application scenarios, the server system may include a receiving interface and a sending interface. The receiving interface is configured to acquire data from external systems, and the sending interface is configured to send data to the external systems. For example, the data domain acquires data to be processed from the external systems through the receiving interface and transmits standardized data to the external systems through the sending interface. The model domain acquires non-standardized data processing models from the external systems through the receiving interface and transmits standardized data processing models to the external systems through the sending interface. The rule domain acquires fault models from the external systems through the receiving interface and transmits data processing results to the external systems through the sending interface.

Evidently, in the data transmission method described above, since the server system provides only two external interfaces, data transmission from the three domains externally may easily cause data congestion and confusion.

To address the above issue, in one embodiment, the server system includes a first interface and a second interface, where the first interface is configured to input data to be processed into the data domain; and the second interface is configured to output standardized data.

In some application scenarios, the data domain acquires data to be processed from the external systems through the first interface, performs standardized processing on the data to be processed, and then outputs the standardized data to the external systems through the second interface. For example, the data to be processed may include various battery data, vehicle data, charging pile data, or energy storage data. In this embodiment of this application, the data domain of the server system integrates multiple data storage devices through the first interface and the second interface, transparently providing various data services to upper-layer operations.

In this embodiment of this application, the data domain interacts data with external systems located outside the server system through the first interface and the second interface, equivalent to establishing dedicated interaction channels between the data domain and the external systems located outside the server system. This approach effectively prevents confusion between data of the data domain and data of other domains, enhancing reliability and efficiency of data interaction between the data domain and the external systems.

In other embodiments, the server system includes either the first interface or the second interface. For example, the server system includes the first interface. In this case, the first interface is configured to both input data to be processed into the data domain and output standardized data to the external systems.

As compared to the approach where the server system includes either the first interface or the second interface, an approach where the server system includes both the first interface and the second interface is equivalent to establishing separate interaction channels for inbound and outbound interactions between the data domain and the external systems located outside the server system. This approach effectively prevents confusion between input data and output data of the data domain, enhancing reliability and efficiency of data interaction between the data domain and the external systems.

In one embodiment, the server system includes a third interface. The third interface is configured to output model definition information of the data processing model.

The model definition information includes operator definitions, model definitions, definitions of parameters required by the model, and the like. In this embodiment of this application, the model domain of the server system provides a standard operator specification language (operator specification language, OSL), callable by upper-layer application without requiring for adaptation to various algorithm sources.

In some application scenarios, the model domain outputs model definition information of the data processing model to the external systems through the third interface, enabling enterprises to standardize their data processing models based on the model definition information.

In this embodiment of this application, the model domain interacts data with external systems located outside the server system through the third interface, equivalent to establishing separate interaction channels between the model domain and the external systems located outside the server system. This approach effectively prevents confusion between model definition information of the model domain and data of other domains, enhancing reliability and efficiency of data interaction between the data domain and the external systems.

In one embodiment, the model domain is further configured to process data standardized by the data domain according to the data processing model. Accordingly, the third interface is further configured to output data processed by the data processing model.

In some application scenarios, the model domain transmits intermediate computation results of the data processing model to external systems through the third interface, usable for training the data processing model.

In this embodiment of this application, the model domain provides intermediate computation results of the data processing model to external systems through the third interface. When the data processing model requires collaborative construction by multiple enterprises, this approach enables data interoperability between enterprises while ensuring enterprise data security, facilitating construction of the data processing model.

In one embodiment, the server system includes a fourth interface. The fourth interface is configured to provide an execution engine of the data processing rules.

The task of the execution engine is to convert input data into data recognizable by the recipient, equivalent to a process of standardizing external data. In some application scenarios, the rule domain invokes external fault models through the fourth interface.

In this embodiment of this application, the rule domain standardizes processing of external rule data through the fourth interface, effectively preventing confusion between data of the rule domain and data of other domains, enhancing reliability and efficiency of data interaction between the rule domain and the external systems, while unifying rule data flowing into the server system, facilitating subsequent data processing.

In one embodiment, the server system includes a fifth interface, the fifth interface being configured to output data processed by the rule domain.

The fifth interface serves as a query interface for data processing results. In this embodiment of this application, the rule domain provides data processing results to external systems through the fifth interface, effectively preventing confusion between data of the rule domain and data of other domains, enhancing reliability and efficiency of data interaction between the rule domain and the external systems.

It should be noted that in some embodiments, the server system may include any one or more of the first interface to the fifth interface. When the server system includes all of the first interface to the fifth interface, data interaction processes between the data domain, the model domain, the rule domain within the server system and the external systems are independent and more flexible, reducing data confusion among the three domains and further enhancing reliability and efficiency of data interaction between the server system and the external systems.

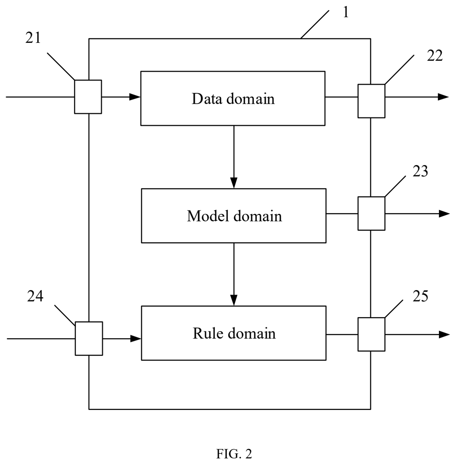

As an example, referring to FIG. 2, a structural schematic diagram of server system interfaces according to an embodiment of this application is shown. As shown in FIG. 2, server system 1 includes a first interface 21, a second interface 22, a third interface 23, a fourth interface 24, and a fifth interface 25. Internally within the server system, the data domain connects to the model domain, and the model domain connects to the rule domain. During data processing, the data domain acquires data to be processed from external systems through the first interface and outputs first processed data standardized from the data to be processed to the external systems through the second interface; the model domain acquires the first processed data from the data domain, processes the first processed data according to the data processing model to obtain second processed data, and outputs the second processed data through the third interface; and the rule domain acquires the second processed data from the model domain, processes the second processed data according to the data processing rules to obtain third processed data, and outputs the third processed data through the fifth interface. In addition, the model domain provides model definition information of the model processing model to the external systems through the third interface, and the rule domain provides an execution engine of the data processing rules to the external systems through the fourth interface.

It should be noted that the above is only an example of a server system interface structure and does not specifically limit the data, position, or name of the server system interfaces.

In one embodiment, the data domain includes at least two data layers, different data layers being configured to store data at different processing stages during standardized processing.

For example, a data layer may refer to a storage medium, meaning different data layers correspond to different storage media. For another example, a data layer may refer to a storage unit or storage partition within a storage medium, meaning different data layers correspond to different storage units or partitions within the same storage medium.

In this embodiment of this application, the standardized processing of the data domain may include multiple processing stages, such as normalization processing, data cleaning, and data aggregation. Storing data at different processing stages in different data layers is equivalent to categorizing and storing data at different processing stages, organizing data during standardization. This approach facilitates data traceability and subsequent fault diagnosis.

In practical applications, industry data types are complex. For example, the new energy industry includes vehicle data, battery data, cell data, charging pile data, energy storage data, configuration data, and the like. Storing all types of industry data in a same storage medium is equivalent to mixing all data together, which is not conducive to subsequent data processing. In addition, enterprises may only involve one or a few types of industry data. After enterprises connect to the server system, if all types of data are mixed together for storage, data leakage is likely to occur during data transmission (such as transmitting data of one enterprise to another), resulting in low data security and privacy.

To address the above issue, in one embodiment, the data layers include at least two storage media, different storage media being configured to store data of different categories.

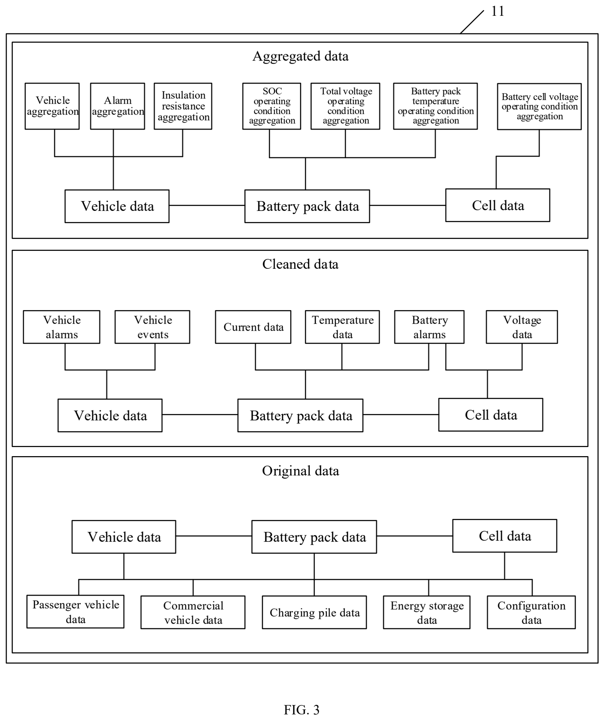

As an example, referring to FIG. 3, a schematic diagram of layered storage according to an embodiment of this application is shown. As shown in FIG. 3, the process of the data domain standardizing processing of data includes an original data stage, a cleaned data stage, and an aggregated data stage, where each processing stage corresponds to a data layer, each data layer includes multiple storage media, and each storage medium stores data of different categories.

As shown in the "original data" stage in FIG. 3, data at this stage are to-be-processed data acquired by the data domain from various enterprises externally through the first interface, including passenger vehicle data, commercial vehicle data, charging pile data, energy storage data, and configuration data. These data are divided into three types: vehicle data, battery pack data, and cell data; then these three types of data are stored in different storage media within the original data layer.

In the cleaned data stage, the three types of data are cleaned separately, and each type of data may be further divided into various subcategories, with each subcategory cleaned separately. As shown in the "cleaned data" stage in FIG. 3, for the vehicle data type, data are divided into two subcategories-vehicle alarms and vehicle events-for separate cleaning; for the battery pack data type, data are divided into three subcategories-battery alarms, current data, and temperature data-for separate cleaning; and for the cell data type, data are divided into two subcategories-battery alarms and voltage data-for separate cleaning. Cleaned data corresponding to the three types-vehicle data, battery pack data, and cell data-are stored in different storage media within the cleaned data layer. Each storage medium may be further divided into multiple storage units/storage areas to store cleaned data of different subcategories within the same type. For example, the storage medium storing vehicle data is divided into two storage areas, with one storage area storing cleaning results of the vehicle alarms subcategory, and another storage area storing cleaning results of the vehicle events subcategory.

In the aggregated data stage, the three types of data are aggregated separately, and each type of data may be further divided into various subcategories, with each subcategory aggregated separately. As shown in the "aggregated data" stage in FIG. 3, for the vehicle data type, aggregation includes vehicle speed aggregation (aggregating data related to vehicle speed), alarm aggregation (aggregating data related to alarms), and insulation resistance aggregation (aggregating data related to insulation resistance). For the battery pack data type, aggregation includes system on chip (System on Chip, SOC) operating condition aggregation (aggregating operating condition data related to SOC), total voltage operating condition aggregation (aggregating operating condition data related to total voltage), and battery pack temperature operating condition data (aggregating operating condition data related to battery pack temperature). The operating condition data of the battery pack refer to operational state data of the battery pack under conditions related to its actions (such as charging and discharging). For the cell data type, aggregation includes battery cell voltage operating condition aggregation (aggregating operating condition data related to cell voltage). Aggregated data corresponding to the three types-vehicle data, battery pack data, and cell data-are stored in different storage media within the aggregated data layer. Each storage medium may be further divided into multiple storage units/storage areas to store aggregated data of different subcategories within the same type. For example, the storage medium storing vehicle data is divided into three storage areas: the first storage area storing vehicle aggregated data, the second storage area storing alarm aggregated data, and the third storage area storing insulation resistance aggregated data.

It should be noted that FIG. 3 only illustrates an example of categorizing and storing data in different data layers, and in embodiments of this application, the data division for each data layer is not specifically limited.

In the embodiments of this application, categorizing and storing data in each data layer is equivalent to organizing data during standardization. This approach facilitates data traceability and subsequent fault diagnosis. In addition, as different enterprises possess different types of industry data, this approach allows enterprises to selectively connect to the server system based on their data types, enabling the server system to possess flexible access capabilities, capable of accommodating and standardizing relevant data of various enterprises.

Based on the server system provided in the above embodiments, an embodiment of this application provides a data processing method applied to the server system.

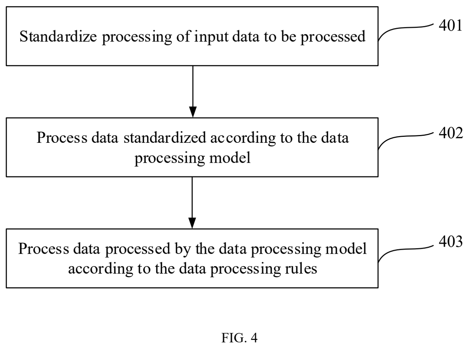

Referring to FIG. 4, a schematic flowchart of a data processing method according to an embodiment of this application is shown. As an example and not a limitation, as shown in FIG. 4, the data processing method may include the following steps.

S401. Standardize processing of input data to be processed.

In an embodiment of this application, S401 may be executed by the data domain in the server system. Specifically, the data domain acquires data to be processed from external systems located outside the server system and executes S401. Alternatively, an external entity of the server system may send data to be processed to the data domain, and the data domain executes S401 after receiving the data to be processed.

In some embodiments, the data processing method may further include a preprocessing process. Specifically, the following step may be included:
prior to the standardizing processing of input data to be processed, sending a data definition to a client to enable the client to convert a data format according to the data definition and obtain the data to be processed.

The data definition complies with a transmission protocol of the first interface for interaction between the data domain and the external systems located outside the server system. The data definition may be provided by the data domain and sent to the client by the data domain. The data format of the data to be processed conforms to the data definition.

Through the preprocessing process described above, the data definition is sent to the client for the client to perform data format conversion, allowing the data domain of the server system to interact with various types of clients, facilitating subsequent standardized data processing. In addition, this preprocessing process is equivalent to pre-standardize client data, effectively reducing the data processing load of the data domain in the server system.

In some embodiments, an implementation of S401 may include:
performing data cleaning on the data to be processed to obtain cleaned data; and
performing data aggregation on the cleaned data to obtain standardized data.

Data cleaning refers to steps of detecting and correcting identifiable errors in data files, including checking data consistency, handling invalid values, and missing values. Consistency checking involves examining whether data meet requirements based on reasonable value ranges and interrelationships of each variable, identifying data that exceed normal ranges, are logically unreasonable, or contradictory. Methods for handling invalid values and missing values may include estimation, case deletion, or variable deletion. For example, estimation involves replacing invalid or missing values of a variable with the sample mean, median, or mode of that variable. Case deletion involves removing samples containing missing values. Variable deletion involves considering removal of a variable if the variable has many invalid and missing values and is not particularly important to the issue under study.

Data aggregation refers to integrating data from different data sources, grouping and merging data from different data sources. For example, as shown in FIG. 3, data related to vehicles from different enterprises are divided into three categories-vehicles, alarms, and insulation resistance-and then merged separately for each category.

Through the data processing process described above, data from different data sources are integrated, achieving standardized processing of data from various enterprises.

Optionally, prior to performing data cleaning on the data to be processed, normalization processing may be performed on the data to be processed. Through normalization processing, data from different data sources are unified within a standard, limited data range, facilitating subsequent data processing.

In some embodiments, the data to be processed, the cleaned data, and the standardized data are stored in different data layers, respectively.

A data layer may refer to a storage medium, meaning different data layers correspond to different storage media. For another example, a data layer may refer to a storage unit or storage partition within a storage medium, meaning different data layers correspond to different storage units or partitions within the same storage medium.

In the embodiments of this application, the standardized processing of the data domain may include multiple processing stages, such as normalization processing, data cleaning, and data aggregation. Storing data at different processing stages in different data layers is equivalent to categorizing and storing data at different processing stages, organizing data during standardization. This approach facilitates data traceability and subsequent fault diagnosis.

In some embodiments, for each of the data layers, data stored in each data layer are divided into at least two categories; and data of different categories are stored in different storage media within the data layer.

For details of the related content of the embodiments of this application, reference is made to the description in the embodiment of FIG. 3 above, and details are not repeated herein.

In the embodiments of this application, categorizing and storing data in each data layer is equivalent to organizing data during standardization. This approach facilitates data traceability and subsequent fault diagnosis. In addition, as different enterprises possess different types of industry data, this approach allows enterprises to selectively connect to the server system based on their data types, enabling the server system to possess flexible access capabilities, capable of accommodating and standardizing relevant data of various enterprises.

S402. Process data standardized according to the data processing model.

In an embodiment of this application, S402 may be executed by the model domain in the server system. Specifically, the data domain sends standardized data to the model domain, and the model domain executes S402. Of course, the model domain may alternatively acquire standardized data actively from the data domain and execute S402.

In some embodiments, the data processing model includes a plurality of operators, an operator being the smallest unit of the data processing model. Accordingly, the data processing method further includes: defining operators in the data processing model according to an operator specification language (operator specification language, OSL).

In the embodiments of this application, operator definitions are provided by the model domain, callable by upper-layer application without requiring for adaptation to various algorithm sources. This operator definition enables standardization of the data processing model.

In some application scenarios, the model domain sends operator definitions to enterprises with algorithm service capabilities, enabling these enterprises to standardize data processing models based on the operator definitions; the enterprises send standardized data processing models to the model domain; and the model domain processes standardized data according to the standardized data processing models.

In other application scenarios, the model domain acquires data processing models from enterprises with algorithm service capabilities, performs standardized processing on the data processing models based on operator definitions, and processes standardized data according to the standardized data processing models.

S403. Process data processed by the data processing model according to the data processing rules.

In an embodiment of this application, S403 may be executed by the rule domain in the server system. Specifically, the model domain sends data processed by the data processing model to the rule domain, and the rule domain executes S403. Alternatively, the rule domain may actively acquire data processed by the data processing model from the model domain and execute S403.

In this embodiment of this application, data processing rules are essentially an orchestration of data processing models based on fault scenarios, used for fault determination. In some embodiments, an implementation of S403 includes:
combining and sorting a plurality of the data processing models according to the data processing rules to obtain a model sequence; and performing data processing on data processed by the data processing model according to the model sequence.

In one example, assuming that the model sequence includes three data processing models-A, B, and C-in sequence. Standardized data from the data domain are input into A, B, and C separately to obtain an output result a of A, an output result b of B, and an output result c of C; then fault determination is performed sequentially based on a, b, and c according to the model sequence to obtain a determination result.

In another example, also assuming that the model sequence includes three data processing models-A, B, and C-in sequence. First, standardized data from the data domain are input into A to obtain an output result of A; the output result of A is input into B to obtain an output result of B; then the output result of B is input into C to obtain an output result of C.

The data processing method described in the embodiment of FIG. 4 enables the server system to standardize processing of data from different data sources and process standardized data based on standardized data processing models and data processing rules. This achieves standardization in three dimensions of data, models (algorithms), and rules, effectively breaks data barriers between different enterprises within an industry, and unifies data processing standards of different enterprises within the industry, thereby overcoming the problem of difficulty in data interoperability between enterprises and providing a reliable data foundation for industry co-construction.

In some embodiments, the data processing method further includes:
standardizing processing of input sample data; setting labels on standardized sample data to obtain training data; and training the data processing model according to the training data.

In the embodiments of this application, the data domain in the server system may standardize processing of sample data and set labels; then the data domain sends the training data to the model domain, and the model domain trains the data processing model according to the training data.

In some applications, the training data may also be used to verify training results of the data processing model.

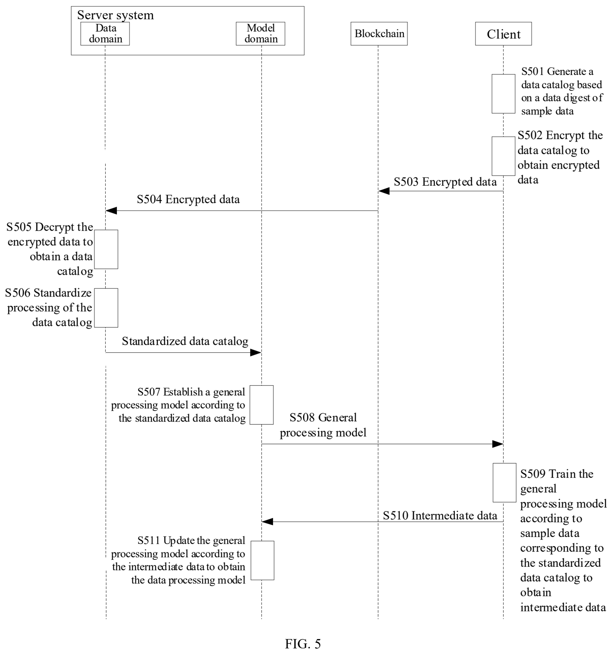

In some application scenarios, enterprises are reluctant to expose their data (such as industry data, algorithm models, and rules) externally. To further enhance privacy and security of data processing, in one embodiment, referring to FIG. 5, a schematic diagram of interaction between a server system and a client according to an embodiment of this application is shown. As shown in FIG. 5, the data processing method may include:
acquiring encrypted data from a blockchain;
decrypting the encrypted data to obtain a data catalog, where the data catalog includes a data digest of sample data in a client;
standardizing processing of the data catalog; and
training the data processing model according to the standardized data catalog.

In this embodiment of this application, the data domain in the server system may acquire encrypted data from the blockchain, decrypt the encrypted data to obtain the data catalog, standardize processing of the data catalog, and send the standardized data catalog to the model domain; and the model domain trains the data processing model according to the standardized data catalog.

Accordingly, at the client, generating encrypted data in advance is required. Specifically, this includes:
generating a data catalog based on a data digest of sample data; encrypting the data catalog to obtain encrypted data; and uploading the encrypted data to the blockchain.

In this embodiment of this application, because the data catalog only includes a data digest of sample data in the client and does not include specific information of the sample data, the client does not provide detailed data to the server system, enhancing privacy and security of data in the client.

In some embodiments, the step of training the data processing model according to the standardized data catalog may include:
establishing a general processing model according to the standardized data catalog;
sending the general processing model to a client to enable the client to train the general processing model according to sample data corresponding to the data catalog and obtain intermediate data;
acquiring the intermediate data; and
updating the general processing model according to the intermediate data to obtain the data processing model.

In the embodiments of this application, the above steps may be executed by the model domain in the server system.

Accordingly, at the client, the process of training the general data processing model may include:
acquiring the general processing model sent by the server system; training the general processing model according to sample data corresponding to the standardized data catalog to obtain intermediate data; and uploading the intermediate data to the server.

In the embodiments of this application, a terminal used by each enterprise for storing/processing data is referred to as a client.

Optionally, the model domain uploads the general processing model to the blockchain, and the client acquires the general processing model from the blockchain. The client uploads the intermediate data to the blockchain, and the model domain acquires the intermediate data from the blockchain.

In this approach, data security during uploading and downloading processes can be ensured through signatures.

In the embodiments of this application, the data domain acquires encrypted data from different clients and processes the data to obtain standardized data catalogs corresponding to each client, equivalent to acquiring data digests of different enterprises; the model domain establishes a general processing model based on the data digests of different enterprises and sends the general processing model to each enterprise separately; each enterprise trains the general processing model based on its own data (sample data) to obtain intermediate data and uploads the intermediate data to the model domain; and the model domain updates the general processing model based on the intermediate data uploaded by each enterprise to obtain the final data processing model.

In one example, referring to FIG. 5, a schematic diagram of interaction between a server system and a client according to an embodiment of this application is shown. As shown in FIG. 5, the process of data interaction between the server system and one client may include:
S501. The client generates a data catalog based on a data digest of sample data;
S502. The client encrypts the data catalog to obtain encrypted data;
S503. The client uploads the encrypted data to the blockchain;
S504. The data domain acquires encrypted data from the blockchain;
S505. The data domain decrypts the encrypted data to obtain a data catalog;
S506. The data domain standardizes processing of the data catalog;
S507. The model domain establishes a general processing model according to the standardized data catalog;
S508. The model domain sends the general processing model to the client;
S509. The client trains the general processing model according to sample data corresponding to the standardized data catalog to obtain intermediate data;
S510. The client uploads the intermediate data to the model domain of the server system; and
S511. The model domain updates the general processing model according to the intermediate data to obtain the data processing model.

In this embodiment of this application, each enterprise trains the general processing model based on its own data without exposing the data to the server system, ensuring privacy and security of enterprise data. In addition, intermediate data reported by each enterprise to the server system represents processing results of the general processing model by each enterprise, preventing the server system and other enterprises from accessing sample data of the enterprise through the intermediate data. This method further ensures privacy and security of enterprise data while ensuring the data processing model.

Corresponding to the data processing method described in the above embodiments, an embodiment of this application provides a data processing apparatus. For ease of description, only parts related to this embodiment of this application are described.

The apparatus includes:
a data domain unit configured to standardize processing of input data to be processed;
a model domain unit configured to process data standardized according to the data processing model; and
a rule domain unit configured to process data processed by the data processing model according to the data processing rules.

Optionally, the data domain unit is further configured to send a data definition to a client to enable the client to convert a data format according to the data definition and obtain the data to be processed.

Optionally, the data domain unit is further configured to:
perform data cleaning on the data to be processed to obtain cleaned data; and
perform data aggregation on the cleaned data to obtain standardized data.

Optionally, the data domain unit is further configured to:
store the data to be processed, the cleaned data, and the standardized data in different data layers, respectively.

Optionally, the data domain unit is further configured to:
divide data stored in each data layer into at least two categories for each data layer; and
store data of different categories in different storage media within the data layer.

Optionally, the model domain unit is further configured to:
define operators in the data processing model according to an operator specification language.

Optionally, the rule domain unit is further configured to:
combine and sort a plurality of the data processing models according to the data processing rules to obtain a model sequence; and
perform data processing on the standardized data according to the model sequence.

Optionally, the data domain unit is further configured to:
standardize processing of input sample data;
set labels on standardized sample data to obtain training data; and
train the data processing model according to the training data.

Optionally, the data domain unit is further configured to:
acquire encrypted data from a blockchain;
decrypt the encrypted data to obtain a data catalog, where the data catalog includes a data digest of sample data in a client; and
standardize processing of the data catalog.

Optionally, the model domain unit is further configured to train the data processing model according to the standardized data catalog.

Optionally, the model domain unit is further configured to:
establish a general processing model according to the standardized data catalog;
send the general processing model to a client to enable the client to train the general processing model according to sample data corresponding to the standardized data catalog and obtain intermediate data;
acquire the intermediate data; and
update the general processing model according to the intermediate data to obtain the data processing model.

It should be noted that because the information interaction and execution processes between the above apparatus/units are based on the same concept as the method embodiments of this application, for their specific functions and technical effects, details may refer to the method embodiment section and are not repeated herein.

In addition, the data processing apparatus described above may be a software unit, hardware unit, or a combination of software and hardware built into existing terminal equipment, or integrated into the terminal equipment as an independent component, or exist as an independent terminal equipment.

Those skilled in the art can clearly understand that, for convenience and brevity of description, the division of the functional units and modules described above is only an example. In practical applications, the functions described above may be allocated to different functional units or modules as needed, dividing the internal structure of the apparatus into different functional units or modules to complete all or part of the functions described above. Each functional unit or module in the embodiments may be integrated into one processing unit, or each unit may exist physically separately, or two or more units may be integrated into one unit. The integrated units may be implemented in hardware form or as software functional units. In addition, specific names of the functional units and modules are only for ease of distinction and are not intended to limit the protection scope of this application. The specific working processes of the units and modules in the system described above may refer to the corresponding processes in the method embodiments described above and are not repeated here.

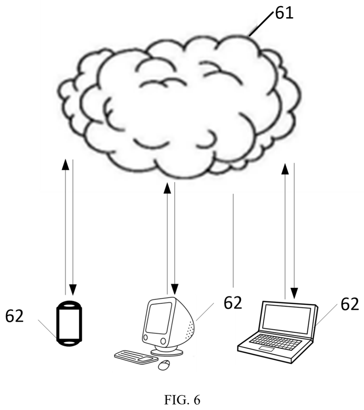

The server system provided in the embodiments of this application and clients constitute a data processing system. The data processing system is introduced below with one embodiment. Referring to FIG. 6, a schematic structural diagram of a data processing system according to an embodiment of this application is shown. As shown in FIG. 6, the data processing system includes a server system 61 and clients 62. The server system implements the data processing method applied to the server system as described in the embodiment of FIG. 4, and the clients implement the data processing method applied to the client as described in the embodiment of FIG. 5. In practical applications, the data processing system may include multiple clients 62, with only three shown in FIG. 6.

In FIG. 6, the server system is represented as a cloud server. In some application scenarios, the server system may also be referred to as a cloud end or cloud side, with no specific limitation herein.

The server system 61 communicates with each client 62 via a wireless network. The wireless network may be a network based on fourth-generation mobile communication technology (the 4th generation mobile communication technology, 4G), fifth-generation mobile communication technology (the 5th generation mobile communication technology, 5G), sixth-generation mobile communication technology (the 6th generation mobile communication technology, 6G), or even applicable to future communication networks, with no specific limitation herein.

In one example, the data domain in the server system 61 receives basic battery data (data to be processed) uploaded by a client 62 with data access capabilities and standardizes processing of the received basic battery data; the model domain in the server system 61 receives a data processing model uploaded by a client 62 with algorithm service capabilities and standardizes processing of the data processing model based on standardized operator definitions; and the rule domain in the server system 61 receives a fault model uploaded by a client 62 with fault resolution capabilities and defines a relationship between the fault model and the data processing model to obtain data processing rules.

It should be noted that a same client may connect to at least one domain in the server system. For example, if client A possesses both data access capabilities and algorithm service capabilities, client A may connect to the data domain to upload basic data and to the model domain to upload a data processing model.

It can be understood that the data domain, model domain, and rule domain in the server system may process data serially or in parallel.

For example, in an application scenario of fault determination, the data domain acquires data to be processed from a client, standardizes processing of the data to be processed to obtain first processed data, and sends the first processed data to the model domain; the model domain processes the first processed data according to a standardized data processing model to obtain second processed data; and the rule domain processes the second processed data according to data processing rules to obtain third processed data. The third processed data are recorded as a fault determination result. In this application scenario, the data domain, model domain, and rule domain process data serially.

For another example, in an application scenario of data standardization, the data domain, model domain, and rule domain may standardize processing of received external data separately. Specifically, the data domain standardizes processing of basic data acquired from client A and transmits the standardized data to client A; the model domain standardizes processing of a data processing model acquired from client B and transmits the standardized data processing model to client B; and the rule domain standardizes processing of a fault model acquired from client C and provides a corresponding execution engine to client C. In this application scenario, the data domain, model domain, and rule domain process data in parallel.

In this embodiment of this application, the data processing system composed of the server system and the clients effectively breaks data barriers between different enterprises within an industry and unifies data processing standards of different enterprises within the industry, thereby overcoming the problem of difficulty in data interoperability between enterprises and providing a reliable data foundation for industry co-construction.

An embodiment of this application provides an electronic device, including a memory, a processor, and a computer program stored in the memory and capable of running on the processor, where the processor, when executing the computer program, implements the data processing method in the embodiments described above.

An embodiment of this application provides a computer-readable storage medium on which a computer program is stored, where the computer program, when executed by a processor, implements the data processing method in the embodiments described above.

This embodiment also provides a computer program product, where the computer-readable storage medium has program codes stored thereon, and when the computer program product is run by a computer, the computer is enabled to execute the related steps described above to implement the data processing method in the embodiments described above.

In several embodiments provided in this application, it should be understood that the disclosed apparatus and method may be implemented in other ways. For example, the apparatus embodiment described above is merely illustrative. For example, division into the modules or units is merely a logical function division, and another division manner may be used during actual implementation. For example, a plurality of units or components may be combined, or may be integrated into another apparatus, or some features may be ignored or not performed. In addition, the displayed or discussed mutual couplings or direct couplings or communications connections may be implemented by using some interfaces. The indirect couplings or communications connections between apparatuses or units may be implemented in electrical, mechanical, or other forms.

In conclusion, it should be noted that the foregoing descriptions are merely specific implementations of this application, but the protection scope of this application is not limited thereto. Any variation or replacement within the technical scope disclosed in this application shall fall within the protection scope of this application. Therefore, the protection scope of this application shall be subject to the protection scope of the claims.

## Claims

1. A server system, **characterized by** comprising:
a data domain configured to standardize processing of input data;
a model domain configured to standardize definition of a data processing model; and
a rule domain configured to define data processing rules.

2. The server system according to claim 1, **characterized in that** the server system comprises a first interface;
the first interface being configured to input data to be processed into the data domain.

3. The server system according to claim 1 or 2, **characterized in that** the server system comprises a second interface;
the second interface being configured to output data standardized by the data domain from the data to be processed.

4. The server system according to claim 1 or 2, **characterized in that** the server system comprises a third interface;
the third interface being configured to output model definition information of the data processing model.

5. The server system according to any one of claims 1 to 4, **characterized in that** the server system comprises a fourth interface;
the fourth interface being configured to provide an execution engine of the data processing rules.

6. The server system according to any one of claims 1 to 5, **characterized in that** the server system comprises a fifth interface, the fifth interface being configured to output data processed by the rule domain.

7. The server system according to any one of claims 1 to 6, **characterized in that** the data domain comprises at least two data layers, different data layers being configured to store data at different processing stages during standardized processing.

8. The server system according to claim 7, **characterized in that** the data layers comprise at least two storage media, different storage media being configured to store data of different categories.

9. A data processing method, **characterized by** being applied to the server system according to any one of claims 1 to 8, wherein the data processing method comprising:
standardizing processing of input data to be processed;
processing data standardized according to the data processing model; and
processing data processed by the data processing model according to the data processing rules.

10. The data processing method according to claim 9, **characterized in that**, prior to the standardizing processing of input data to be processed, the data processing method further comprises:
sending a data definition to a client to enable the client to convert a data format according to the data definition and obtain the data to be processed.

11. The data processing method according to claim 9 or 10, **characterized in that** the standardizing processing of input data to be processed comprises:
performing data cleaning on the data to be processed to obtain cleaned data; and
performing data aggregation on the cleaned data to obtain standardized data.

12. The data processing method according to claim 11, **characterized in that** the data processing method further comprises:
storing the data to be processed, the cleaned data, and the standardized data in different data layers, respectively.

13. The data processing method according to claim 12, **characterized in that** the data processing method further comprises:
dividing data stored in the data layer into at least two categories for each of the data layers; and
storing data of different categories in different storage media within the data layer.

14. The data processing method according to any one of claims 9 to 13, **characterized in that** the data processing model comprises a plurality of operators; and
the data processing method further comprising:
defining the operators in the data processing model according to an operator specification language.

15. The data processing method according to any one of claims 9 to 14, **characterized in that** the processing data standardized according to the data processing rules comprises:
combining and sorting a plurality of the data processing models according to the data processing rules to obtain a model sequence; and
performing data processing on the standardized data according to the model sequence.

16. The data processing method according to any one of claims 9 to 15, **characterized in that** the data processing method further comprises:
standardizing processing of input sample data;
setting labels on standardized sample data to obtain training data; and
training the data processing model according to the training data.

17. The data processing method according to any one of claims 9 to 15, **characterized in that** the data processing method further comprises:
acquiring encrypted data from a blockchain;
decrypting the encrypted data to obtain a data catalog, wherein the data catalog comprises a data digest of sample data in a client;
standardizing processing of the data catalog; and
training the data processing model according to the standardized data catalog.

18. The data processing method according to claim 16, **characterized in that** the training the data processing model according to the standardized data catalog comprises:
establishing a general processing model according to the standardized data catalog;
sending the general processing model to a client to enable the client to train the general processing model according to sample data corresponding to the standardized data catalog and obtain intermediate data;
acquiring the intermediate data; and
updating the general processing model according to the intermediate data to obtain the data processing model.

19. A data processing system, **characterized by** comprising a server system and a client; wherein the server system implements the data processing method according to any one of claims 9 to 18.

20. An electronic device comprising a memory, a processor, and a computer program stored in the memory and capable of running on the processor, **characterized in that** the processor, when executing the computer program, implements the data processing method according to any one of claims 9 to 18.

21. A computer-readable storage medium, on which a computer program is stored, **characterized in that** the computer program, when executed by a processor, implements the data processing method according to any one of claims 9 to 18.
